# EUROPÄISCHE PATENTSCHRIFT

(11) **EP 3 463 731 B1**
(45) Veröffentlichungstag und Bekanntmachung des Hinweises auf die Patenterteilung: **18.10.2023**
(21) Anmeldenummer: 17707765.8
(22) Anmeldetag: 03.02.2017
(51) Int. Cl.: B23C 5/06

(54) **SCHNEIDPLATTE FÜR EIN FRÄSWERKZEUG UND FRÄSWERKZEUG**
CUTTING INSERT FOR A MILLING TOOL AND MILLING TOOL
PLAQUETTE DE COUPE POUR UN OUTIL DE FRAISAGE ET OUTIL DE FRAISAGE

(30) Priorität: 23.05.2016 DE 102016109452
(43) Veröffentlichungstag der Anmeldung: 10.04.2019
(73) Patentinhaber: Hartmetall-Werkzeugfabrik Paul Horn GmbH, 72072 Tübingen (DE)
(72) Erfinder: STARK, Christian, 72108 Rottenburg (DE)
(74) Vertreter: Witte, Weller & Partner Patentanwälte mbB
(86) Internationale Anmeldenummer: PCT/EP2017/052310
(87) Internationale Veröffentlichungsnummer: WO 2017/202509

(56) Entgegenhaltungen:
- EP-A1- 2 703 108
- EP-A1- 2 727 672
- WO-A1-2012/147924
- WO-A1-2015/156373
- RU-C1- 2 583 975
- US-A1- 2013 251 464

## Beschreibung

Die vorliegende Erfindung betrifft eine Schneidplatte für ein Fräswerkzeug gemäß dem Oberbegriff des Patentanspruchs 1. Die vorliegende Erfindung betrifft des Weiteren ein Fräswerkzeug mit einer solchen Schneidplatte.

Bei der erfindungsgemäßen Schneidplatte handelt es sich um eine doppelseitige Wendeschneidplatte, welche insbesondere in Fräswerkzeugen zum Einsatz kommt. Sie besitzt eine erste Seite, eine zu der ersten Seite identische zweite Seite und eine Umfangsfläche, die sich zwischen der ersten und der zweiten Seite erstreckt. Des Weiteren weist die erfindungsgemäße Schneidplatte eine Bohrung auf, welche sich entlang einer Bohrungsachse erstreckt, wobei die Schneidplatte 120°-drehsymmetrisch zu der Bohrungsachse ist. Die Schneidplatte weist sowohl auf der ersten als auch auf der zweiten Seite jeweils drei identisch geformte Schneidenbereiche auf, welche sich am Übergang zwischen der ersten Seite und der Umfangsfläche bzw. am Übergang zwischen der zweiten Seite und der Umfangsfläche befinden. Aufgrund der doppelseitigen Ausführung der Schneidplatte (erste Seite und zweite Seite identisch) ergeben sich insgesamt sechs Schneidenbereiche. Jeder dieser sechs Schneidenbereiche weist eine geradlinig verlaufende erste Schneidkante, eine geradlinig verlaufende zweite Schneidkante und eine bogenförmige dritte Schneidkante auf, wobei ein erstes Ende der ersten Schneidkante unmittelbar mit einem ersten Ende der dritten Schneidkante verbunden ist, und ein erstes Ende der zweiten Schneidkante unmittelbar mit einem zweiten Ende der dritten Schneidkante verbunden ist. Die bogenförmigen dritten Schneidkanten sind also jeweils zwischen einer ersten und einer zweiten geradlinig verlaufenden Schneidkante angeordnet. Die ersten und die zweiten Schneidkanten sind gleich lang ausgeführt. Die Schneidplatte weist ferner auf der ersten Seite eine orthogonal zur Bohrungsachse verlaufende erste Anlagefläche auf, welche in einer ersten Anlage-Ebene liegt. Auf der zweiten Seite weist die Schneidplatte ebenso eine orthogonal zu der Bohrungsachse verlaufende zweite Anlagefläche auf, welche in einer zweiten Anlage-Ebene liegt, die parallel zu der ersten Anlage-Ebene verläuft, und wobei die ersten Schneidkanten an ihren den ersten Enden gegenüberliegenden zweiten Enden mit jeweils einer von insgesamt sechs bogenförmigen Kanten verbunden sind, deren Scheitelpunkt sich zwischen der ersten und der zweiten Anlage-Ebene befindet. Diese bogenförmigen Kanten grenzen unmittelbar an die zweiten Enden der ersten Schneidkanten an. Da jede der insgesamt sechs ersten Schneidkanten mit einer anderen bogenförmigen Kante verbunden ist, existieren insgesamt ebenso bogenförmige Kanten. Diese bogenförmigen Kanten sind vorzugsweise als Radien ausgestaltet.

Eine gattungsgemäße Schneidplatte gemäß dem Oberbegriff des Anspruchs 1 ist bereits aus der WO 2012/147924 A1 bekannt. Weitere Schneidplatten sind aus der WO 2017/202509 A1, der EP 2 703 108 A1, der US 2013/0251464 A1, der WO 2015/104703 A1, der EP 2 727 672 A1 und der EP 2 774 705 A1 bekannt.

Wenngleich sich die bereits aus dem Stand der Technik bekannten Schneidplatten in vielerlei Hinsicht als vorteilhaft herausgestellt haben, haben diese dennoch einige Nachteile, insbesondere in Bezug auf die Zerspanungseigenschaften.

Vor diesem Hintergrund ist es eine Aufgabe der vorliegenden Erfindung, eine Schneidplatte der oben genannten Art bereitzustellen, welche im Vergleich zu den aus dem Stand der Technik bekannten Schneidplatten insbesondere in Bezug auf die Zerspanungseigenschaften vorteilhaft ist.

Diese Aufgabe wird ausgehend von der Schneidplatte der eingangs genannten Art dadurch gelöst, dass ein imaginärer Kreis, dessen Mittelpunkt auf der Bohrungsachse liegt, in einer Draufsicht in Richtung der Bohrungsachse betrachtet, die auf der ersten Seite angeordneten ersten und zweiten Schneidkanten an insgesamt sechs Stellen, allerdings jede dieser Schneidkanten nur an jeweils einer Stelle tangiert.

Aufgrund der Tatsache, dass die Scheitelpunkte der bogenförmigen Kanten jeweils zwischen der ersten und der zweiten Anlage-Ebene angeordnet sind, sind die Scheitelpunkte in einer Seitenansicht der Schneidplatte betrachtet, also jeweils "unterhalb" der ersten bzw. zweiten Anlagefläche angeordnet. Durch die Lage der Scheitelpunkte unterhalb der Anlage-Ebene ergeben sich vorteilhafte Eigenschaften für die Auslegung der Spanformgeometrie; wie zum Beispiel ein gewisser Spanbruch, eine gezielte Spanformung und Spanlenkung bei der spanenden Bearbeitung

Die zweiten Enden der ersten Schneidkanten sind vorzugsweise jeweils unmittelbar mit einem ersten Ende der bogenförmigen Kanten verbunden, wobei die zweiten Schneidkanten mit ihren den ersten Enden gegenüberliegenden zweiten Enden jeweils mit einem zweiten Ende der bogenförmigen Kanten verbunden sind. Die bogenförmigen Kanten (Radien) erstrecken sich vorzugsweise also jeweils zwischen einer ersten Schneidkante eines Schneidenbereichs und einer zweiten Schneidkante eines anderen Schneidenbereichs der gleichen Schneidplatten-Seite. Die bogenförmigen Kanten trennen also sozusagen die Schneidenbereiche voneinander. Pro Schneidplatten-Seite existieren insgesamt drei bogenförmige Kanten, welche um 120° zueinander versetzt sind.

Die bogenförmigen Kanten sind nicht zu verwechseln mit den bogenförmigen dritten Schneidkanten. Die bogenförmigen dritten Schneidkanten bilden die Spitzen der Schneidenbereiche. Sie sind jeweils zwischen einer ersten Schneidkante und einer zweiten Schneidkante des jeweils gleichen Schneidenbereichs angeordnet und unmittelbar mit deren ersten Enden verbunden.

Gemäß einer weiteren Ausgestaltung der vorliegenden Erfindung schließen die ersten Schneidkanten mit den zweiten Schneidkanten der jeweils gleichen Schneidenbereiche einen spitzen Winkel α ein.

Die meisten aus dem Stand der Technik bekannten Schneidplatten dieser Art weisen im Gegensatz dazu an dieser Stelle einen rechten Winkel auf. Durch die konstruktive Ausführung als spitzer Winkel ergibt sich ein verbessertes "Eintauchen", da sich entsprechend große Freilaufeigenschaften des Fräswerkzeugs ergeben. Das Nachschnittverhalten des Fräswerkzeugs während dem schrägen oder zirkularen "Eintauchen" ist ebenso mit spitzem Winkel besser.

Unter einem "Eintauchen" des Fräswerkzeugs ist insbesondere eine Bearbeitung gemeint, bei der das Fräswerkzeug rotiert und schräg zur Rotationsachse in das Werkstück hineinbewegt wird. Die Vorschubrichtung hat dabei also sowohl eine Bewegungskomponente parallel zur Rotationsachse des Fräswerkzeugs als auch eine Bewegungskomponente senkrecht dazu. In Bezug auf die Zerspanungseigenschaften haben sich insbesondere Winkel α im Bereich von 84° bis 86° als vorteilhaft herausgestellt. Besonders bevorzugt ist ein Winkel α von 85°.

Erfindungsgemäß tangiert ein imaginärer Kreis, dessen Mittelpunkt auf der Bohrungsachse liegt, die auf der ersten Seite angeordneten ersten und zweiten Schneidkanten an insgesamt sechs Stellen. Allerdings tangiert dieser Kreis jede dieser Schneidkanten nur an jeweils einer Stelle. Korrespondierend dazu tangiert ein zweiter imaginärer Kreis, dessen Mittelpunkt auch auf der Bohrungsachse liegt, die auf der zweiten Seite angeordneten ersten und zweiten Schneidkanten an insgesamt sechs Stellen.

Gemäß einer weiteren Ausgestaltung der erfindungsgemäßen Schneidplatte ist die Schneidplatte, zumindest bis auf die Bohrung, spiegelsymmetrisch zu einer Mittelebene, welche orthogonal zu der Bohrungsachse verläuft und äquidistant zu der ersten und der zweiten Anlage-Ebene ist.

Die Einschränkung der Spiegelsymmetrie "bis auf die Bohrung" rührt insbesondere daher, dass sich die Bohrung, welche als Durchgangsbohrung ausgestaltet ist, in Bezug auf die Mittelebene fertigungsbedingt nicht exakt spiegelsymmetrisch ausgestaltet ist. Dies resultiert insbesondere aus den Pressformen, welche zum Pressen der Schneidplatte verwendet werden. Diese nicht exakte Spiegelsymmetrie der Bohrung relativ zur Mittelebene hat jedoch keinen Einfluss darauf, wie die Schneidplatte am Halter angeordnet ist. Der Plattensitz und die Zerspanungseigenschaften sind unabhängig davon, ob die Schneidplatte mit ihrer ersten oder ihrer zweiten Seite am Werkzeughalter aufliegt, jeweils die gleichen, da die Schneidplatte ansonsten exakt symmetrisch ist und die leichte Asymmetrie der Bohrung bezüglich der Mittelebene keinen Einfluss auf die Befestigung der Schneidplatte am Werkzeughalter hat.

Es versteht sich, dass es grundsätzlich möglich ist, dass auch die Bohrung exakt spiegelsymmetrisch zu der Mittelebene ist. Eine Rotationssymmetrie der Bohrung relativ zur Bohrungsachse ist ohnehin erwünscht.

Gemäß einer weiteren Ausgestaltung der erfindungsgemäßen Schneidplatte weisen die bogenförmigen dritten Schneidkanten jeweils einen Scheitelpunkt auf, wobei die Scheitelpunkte der dritten Schneidkanten im Vergleich zu allen übrigen Punkten der Schneidplatte jeweils den größten Abstand zu der Mittelebene haben.

Sowohl die ersten als auch die zweiten Schneidkanten verlaufen in Bezug auf die Mittelebene, also geneigt. Die Ecken der Schneidenbereiche, in denen die bogenförmigen dritten Schneidkanten angeordnet sind, bilden die jeweils höchsten Punkte (parallel zu der Bohrungsachse gemessen) der ersten bzw. zweiten Seite der Schneidplatte.

Gemäß einer weiteren Ausgestaltung der erfindungsgemäßen Schneidplatte weist die erste Anlagefläche drei voneinander getrennte erste Teilflächen auf, die in der ersten Anlage-Ebene liegen. Ebenso weist die zweite Anlagefläche vorzugsweise drei voneinander getrennte zweite Teilflächen auf, die in der zweiten Anlage-Ebene liegen. Die drei ersten Teilflächen werden vorzugsweise durch drei erste Vertiefungen voneinander getrennt, welche um 120° zueinander versetzt angeordnet sind. Die drei zweiten Teilflächen werden ebenso durch drei zweite Vertiefungen voneinander getrennt, welche um 120° zueinander versetzt sind. Durch diese Trennung der Anlageflächen entsteht eine mechanisch definierte Dreipunktauflage, welche für einen mechanisch stabilen Sitz der Wendeschneidplatte im Plattensitz sorgt.

Wie bereits eingangs erwähnt, betrifft die vorliegende Erfindung nicht nur die Schneidplatte selbst, sondern auch ein Fräswerkzeug, in dem diese Schneidplatte zum Einsatz kommt.

Gemäß einer Ausgestaltung des erfindungsgemäßen Fräswerkzeugs ist das Befestigungselement als Schraube ausgestaltet und der Werkzeughalter weist ein entlang einer Gewindeachse verlaufendes Gewinde auf, in das die Schraube eingreift, mit der die Schneidplatte an dem Werkzeughalter befestigt wird, wobei der Werkzeughalter eine erste, eine zweite und eine dritte Halter-Anlagefläche aufweist. Die erste Halter-Anlagefläche verläuft orthogonal zu der Gewindeachse. Die zweite und die dritte Halter-Anlagefläche verlaufen quer zueinander und im Wesentlichen parallel zu der Gewindeachse. Die Schneidplatte liegt in montiertem Zustand des Werkzeugs an dem Werkzeughalter lediglich an der ersten, der zweiten und der dritten Halter-Anlagefläche an.

Im Gegensatz zu den meisten aus dem Stand der Technik bekannten Fräswerkzeugen dieser Art liegt die Schneidplatte am Werkzeughalter also "nur" an insgesamt drei Flächen und nicht, wie sonst üblich, an vier Flächen an.

Die zweite und die dritte Halter-Anlagefläche schließen untereinander einen stumpfen Winkel ein, wobei die Schneidplatte mit einem ersten Bereich der Umfangsfläche an der zweiten Halter-Anlagefläche anliegt und mit einem zweiten Bereich der Umfangsfläche an der dritten Halter-Anlagefläche anliegt.

Gemäß einer weiteren Ausgestaltung des erfindungsgemäßen Fräswerkzeugs ist ein Abstand zwischen der Gewindeachse und der zweiten Halter-Anlagefläche gleich groß wie ein Abstand zwischen der Gewindeachse und der dritten Halter-Anlagefläche, jedoch kleiner ist als ein Abstand zwischen der Bohrungsachse und dem ersten bzw. zweiten Bereich der Umfangsfläche. Hierdurch entsteht eine Art Niederzug, so dass die Schraube während des Anziehens die Schneidplatte automatisch gegen die zweite und dritte Halter-Anlagefläche presst. Dies erhöht die Stabilität der Wendeschneidplatte im Plattensitz.

Ausführungsbeispiele der Erfindung sind in den Zeichnungen dargestellt und werden in der nachfolgenden Beschreibung näher erläutert. Es zeigen:
- Fig. 1: eine perspektivische Ansicht eines Ausführungsbeispiels einer erfindungsgemäßen Schneidplatte;
- Fig. 2: eine Draufsicht auf das in Fig. 1 dargestellten Ausführungsbeispiel der erfindungsgemäßen Schneidplatte;
- Fig. 3: eine Schnittansicht des in Fig. 1 dargestellten Ausführungsbeispiels der erfindungsgemäßen Schneidplatte;
- Fig. 4: eine Seitenansicht des in Fig. 1 dargestellten Ausführungsbeispiels der erfindungsgemäßen Schneidplatte;
- Fig. 5A: ein Detail aus Fig. 4;
- Fig. 5B: ein weiteres Detail aus Fig. 4;
- Fig. 6: eine Seitenansicht eines weiteren Ausführungsbeispiels der erfindungsgemäßen Schneidplatte;
- Fig. 7: ein Detail aus Fig. 6;
- Fig. 8: eine erste Ansicht eines Werkzeughalters gemäß einem Ausführungsbeispiel der vorliegenden Erfindung;
- Fig. 9: eine zweite Ansicht des in Fig. 8 gezeigten Werkzeughalters;
- Fig. 10: eine erste Ansicht eines Ausführungsbeispiels eines erfindungsgemäßen Fräswerkzeugs;
- Fig. 11: eine zweiten Ansicht des in Fig. 10 gezeigten Ausführungsbeispiels des erfindungsgemäßen Fräswerkzeugs; und
- Fig. 12: eine dritte Ansicht des in Fig. 10 gezeigten Ausführungsbeispiels des erfindungsgemäßen Fräswerkzeugs.

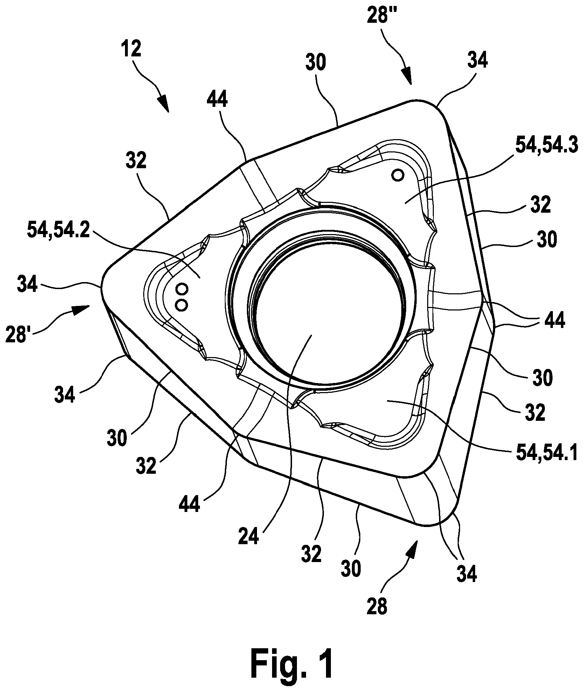

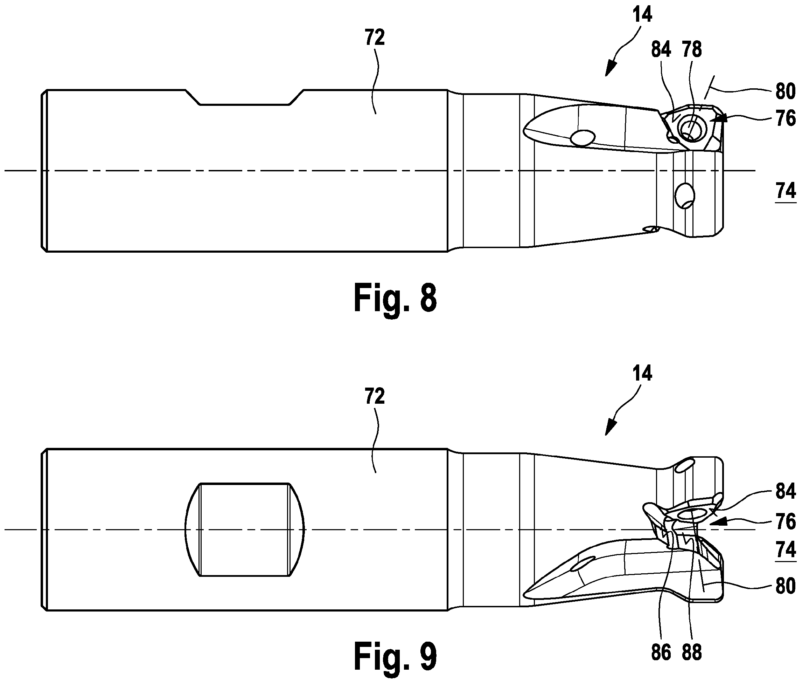

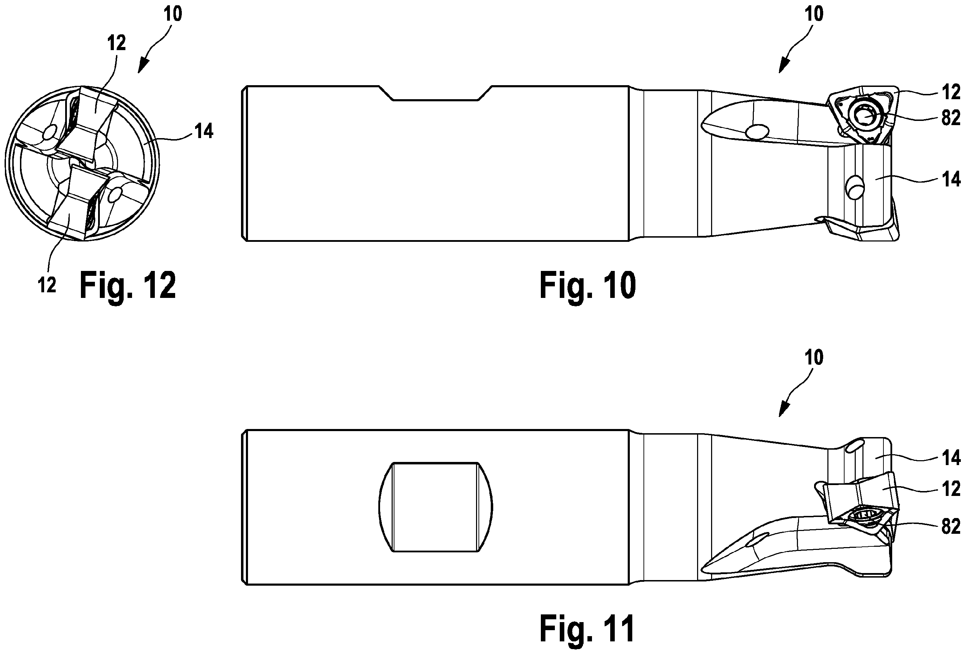

Die Fig. 1-7 zeigen zwei verschiedene Ausführungsformen der erfindungsgemäßen Schneidplatte. Die Fig. 8 und 9 zeigen eine Ausführungsform eines Werkzeughalters des erfindungsgemäßen Fräswerkzeugs. Die Fig. 10-12 zeigen eine Ausführungsform des erfindungsgemäßen Fräswerkzeugs inklusive Schneidplatte und Werkzeughalter.

Das Fräswerkzeug ist in den Figuren gesamthaft mit der Bezugsziffer 10 bezeichnet. Die Schneidplatte ist in den Figuren gesamthaft mit der Bezugsziffer 12 bezeichnet. Der Werkzeughalter ist in den Figuren gesamthaft mit der Bezugsziffer 14 bezeichnet.

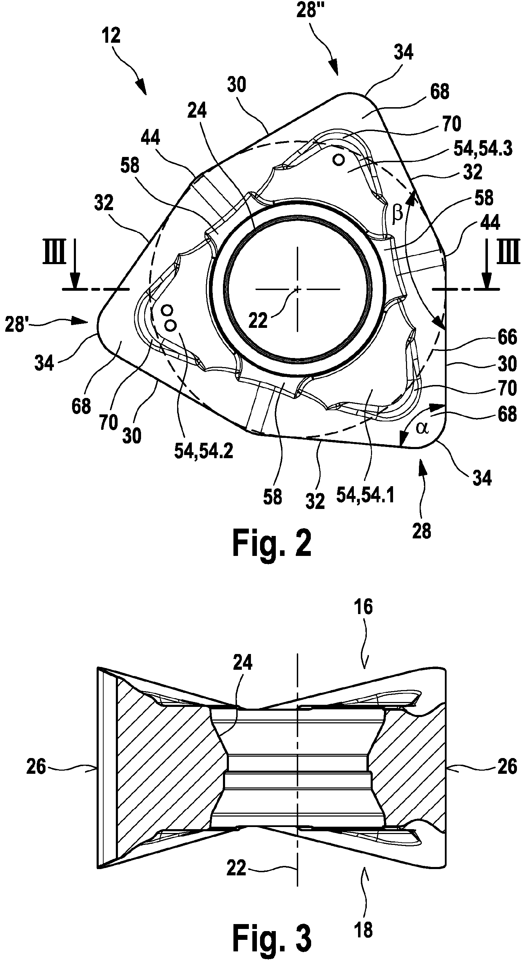

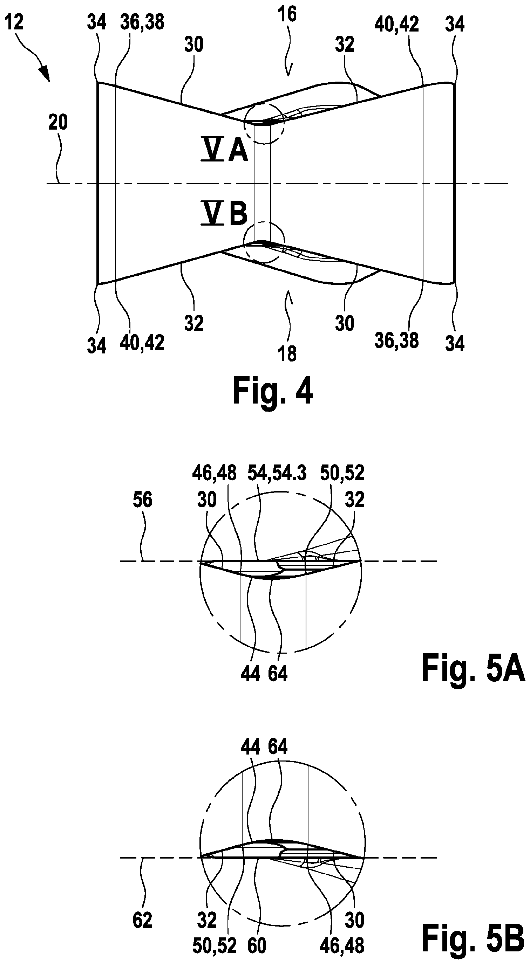

Bei der erfindungsgemäßen Schneidplatte 12 handelt es sich um eine doppelseitige Wendeschneidplatte. Sie besitzt eine Oberseite 16, welche als erste Seite der Schneidplatte 12 bezeichnet wird, und eine Unterseite 18, welche vorliegend als zweite Seite der Schneidplatte 12 bezeichnet wird. In Fig. 2 ist die erste Seite 16 der Schneidplatte 12 in einer Draufsicht gezeigt. Die zweite Seite 18 ist identisch dazu ausgestaltet. Zumindest bis auf kleinere, weiter unten noch zu erläuternde Details ist die Schneidplatte 12 spiegelsymmetrisch zu einer Mittelebene 20 ausgestaltet, welche die Schneidplatte 12 in zwei gleichgroße Hälften teilt (siehe Fig. 4). Diese Mittelebene 20 verläuft orthogonal zu einer Symmetrieachse 22 (siehe Fig. 3). Die Symmetrieachse 22 fällt mit einer Mittelachse einer Bohrung 24 zusammen, welche die Schneidplatte 12 vollständig durchdringt. Die Symmetrieachse bzw. Mittelachse 22 der Bohrung 24 wird daher nachfolgend als Bohrungsachse 22 bezeichnet.

Wie insbesondere aus Fig. 2 ersichtlich ist, ist die Schneidplatte 12 zusätzlich zu der erwähnten Spiegelsymmetrie auch 120°-drehsymmetrisch zu der Bohrungsachse 22. Die Schneidplatte 12 bildet sich also bei Drehung um 120° um die Bohrungsachse 22 jeweils wieder auf sich selbst ab.

Zwischen der ersten Seite 16 und der zweiten Seite 18 der Schneidplatte 12 erstreckt sich eine Umfangsfläche 26, welche die Schneidplatte 12 umfangsseitig vollständig umgibt. Am Übergang zwischen dieser Umfangsfläche 26 und der ersten Seite 16 sowie am Übergang zwischen der Umfangsfläche 26 und der zweiten Seite 18 befinden sich jeweils drei identisch geformte Schneidenbereiche 28, 28', 28".

Insgesamt besitzt die Schneidplatte 12 somit also sechs identische Schneidenbereiche 28, 28', 28". Jeder dieser Schneidenbereiche 28, 28', 28" weist zwei geradlinig verlaufende Schneidkanten 30, 32 sowie eine zwischen diesen beiden Schneidkanten 30, 32 verlaufende, bogenförmige Schneidkante 34 auf. Bei den ersten und zweiten Schneidkanten 30, 32 handelt es sich um ungekrümmte, nicht abgewinkelte, stetige, entlang einer geraden verlaufenden Schneidkanten. Die ersten und zweiten Schneidkanten 30, 32 haben vorzugsweise eine identische Form und Länge. Bei den dritten Schneidkanten 34 handelt es sich um gekrümmte, vorzugsweise ebenfalls stetige Schneidkanten. Die dritten Schneidkanten 34 grenzen unmittelbar an die ersten Schneidkanten 30 und die zweiten Schneidkanten 32 an. Genauer gesagt, ist ein erstes Ende 36 der dritten Schneidkante 34 des ersten Schneidenbereichs 28 mit einem ersten Ende 38 der ersten Schneidkante 30 des ersten Schneidenbereichs 28 verbunden (siehe Fig. 1, 2 und 4). Ein zweites Ende 40 der dritten Schneidkante 34 des ersten Schneidenbereichs 28 ist mit einem ersten Ende 42 der zweiten Schneidkante 32 des ersten Schneidenbereichs 28 verbunden. Gleiches gilt entsprechend für die beiden anderen Schneidenbereiche 28', 28" der gleichen Schneidplatten-Seite 16 bzw. auch für die drei anderen Schneidenbereiche, welche in identischer Weise auf der zweiten Schneidplatten-Seite 18 angeordnet sind.

Die ersten und zweiten Schneidkanten 30, 32 des jeweils Schneidenbereichs 28, 28', 28" schließen untereinander jeweils einen spitzen Winkel α ein, welcher vorzugsweise im Bereich zwischen 84° und 86°gewählt ist. Gemäß einer bevorzugten Ausführung der vorliegenden Erfindung hat der Winkel α eine Größe von 85°.

Eine erste Schneidkante 30 eines Schneidenbereichs 28, 28', 28" schließt mit einer zweiten Schneidkante 32 eines anderen, benachbarten Schneidenbereichs 28, 28', 28" jeweils einen stumpfen Winkel β ein.

Die Schneidplatte 12 weist am Übergang zwischen der Umfangsfläche 26 und der ersten Seite 16 bzw. am Übergang zwischen der Umfangsfläche 26 und der zweiten Seite 18 ferner pro Seite 16, 18 jeweils drei bogenförmige Kanten 44 auf, welche vorzugsweise als Radien ausgestaltet sind. Ähnlich wie die bogenförmigen Schneidkanten 34 sind auch diese Radien 44 jeweils zwischen einer ersten Schneidkante 30 und einer zweiten Schneidkante 32 angeordnet. Ein erstes Ende 46 der Radien 44 grenzt jeweils an ein zweites Ende 48 einer der ersten Schneidkanten 30. Ein zweites Ende 50 der Radien 44 grenzt jeweils an ein zweites Ende 52 einer der zweiten Schneidkanten 32 (siehe Fig. 5A und 5B). Anders als die dritten, bogenförmigen Schneidkanten 34 sind die Radien 44 jedoch zwischen den drei Schneidenbereichen 28, 28', 28" jeder Schneidplatten-Seite 16, 18 angeordnet (siehe Fig1 und 2). Sie grenzen also an ein zweites Ende 48 der Schneidkante 30 eines Schneidenbereichs 28, 28' bzw. 28" sowie an ein zweites Ende 52 der zweiten Schneidkante 32 eines anderen Schneidenbereichs 28, 28', 28".

Die Schneidplatte 12 weist des Weiteren auf der ersten Seite 16 eine erste Anlagefläche 54 auf, welche in drei Teilflächen 54.1, 54.2, 54.3 aufgeteilt sind. Die erste Anlagefläche 54 bzw. die drei ersten Teilflächen 54.1, 54.2, 54.3 liegen allesamt in einer Ebene, welche vorliegend als erste Anlage-Ebene 56 bezeichnet wird (siehe Fig. 5A). Diese erste Anlage-Ebene 56 verläuft orthogonal zu der Bohrungsachse 22. Die drei ersten Teilflächen 54.1, 54.2, 54.3 werden voneinander durch drei erste Vertiefungen 58 getrennt. Diese ersten Vertiefungen verlaufen in Bezug auf die Bohrungsachse 22 im Wesentlichen radial nach außen. Sie sind um 120° zueinander versetzt. Die erste Anlagefläche 54 dient, wie weiter unten noch im Detail erläutert wird, zur Anlage an dem Werkzeughalter 14. Durch die Aufteilung der ersten Anlagefläche 54 in drei Teilflächen 54.1, 54.2, 54.3 entsteht eine definierte Dreipunkt- bzw. Dreiflächenauflage, welche zu einem stabilen Sitz der Wendeschneidplatte im Plattensitz beiträgt.

Aufgrund der bereits genannten Spiegelsymmetrie zur Mittelebene 20 weist die Schneidplatte 12 auf ihrer zweiten Seite 18 eine äquivalente Anlagefläche 60 auf, welche vorliegend als zweite Anlagefläche 60 bezeichnet wird und ebenfalls in drei zweite Teilflächen aufgeteilt ist. Die zweite Anlagefläche 60 bzw. die drei Teilflächen der zweiten Anlagefläche 60 liegen ebenfalls in einer gemeinsamen Ebene, welche vorliegend als zweite Anlage-Ebene 62 bezeichnet wird (siehe Fig. 5B). Diese zweite Anlage-Ebene 62 verläuft parallel zu der ersten Anlage-Ebene 56 und senkrecht zu der Bohrungsachse 22.

Aus den in Fig. 5A und 5B dargestellten Detailansichten wird ferner ersichtlich, dass die bogenförmigen Kanten 44 jeweils einen Scheitelpunkt 64 aufweisen, welche unterhalb der genannten Anlage-Ebenen 56 bzw. 62 liegen. Genauer gesagt, liegen die Scheitelpunkte 64 der auf der ersten Seite 16 angeordneten bogenförmigen Kanten 44 unterhalb der ersten Anlage-Ebene 56 und die Scheitelpunkte 64 der auf der zweiten Seite 18 angeordneten bogenförmigen Kanten 44 liegen unterhalb der zweiten Anlage-Ebene 62. Die insgesamt sechs Scheitelpunkte 64 der insgesamt sechs bogenförmigen Kanten 44, liegen also allesamt räumlich zwischen der ersten Anlage-Ebene 56 und der zweiten Anlage-Ebene 62. Die Scheitelpunkte 64 haben also von der Mittelebene 20 einen kürzeren Abstand als die Anlage-Ebenen 56, 58.

Folgende weitere Merkmale der erfindungsgemäßen Schneidplatte 12 sind insbesondere aus den Fig. 2-4 ersichtlich: Ein imaginärer Kreis 66, dessen Mittelpunkt auf der Bohrungsachse 22 liegt, berührt die ersten und zweiten Schneidkanten 30, 32 der ersten Seite 16 an insgesamt sechs Stellen, wobei jede Schneidkante 30, 32 jeweils nur an einer Stelle von dem imaginären Kreis 66 berührt wird. Wie insbesondere aus Fig. 4 ersichtlich ist, liegen die Schneidkanten 30, 32 jedoch nicht in einer gemeinsamen Ebene, sondern verlaufen quer (also nicht parallel) zueinander. Sie verlaufen allesamt auch quer zu der Mittelebene 20 bzw. den Anlage-Ebenen 56, 58. Die höchsten Stellen der Schneidplatte 12 bzw. die Stellen der Schneidplatte 12, welche im Vergleich zu allen übrigen Punkten der Schneidplatte 12 den größten Abstand von der Mittelebene 20 besitzen, befinden sich an den Scheitelpunkten der bogenförmigen dritten Schneidkanten 34. Die ersten und zweiten Schneidkanten 30, 32 verlaufen dementsprechend ausgehend von ihrem jeweiligen ersten Ende 38, 42 jeweils schräg auf die Mittelebene 20 zu in Richtung zu ihrem jeweiligen zweiten Ende 48, 52. Die zweiten Enden 48 der ersten Schneidkanten 30 und die zweiten Enden 52 der zweiten Schneidkanten 32 haben also jeweils einen kürzeren Abstand von der Mittelebene 20 als die ersten Enden 38 der ersten Schneidkanten 30 und die ersten Enden 42 der zweiten Schneidkanten 32.

Wie ferner noch aus Fig. 2 ersichtlich ist, weist jeder Schneidenbereich 28, 28', 28" eine gekrümmte Spanfläche 68 auf. Diese Spanflächen 68 erstrecken sich in jedem Schneidenbereich 28, 28',28" jeweils zwischen der Teil-Anlagefläche 54.1, 54.2, 54.3 des jeweiligen Schneidenbereichs 28, 28', 28" und den jeweiligen Schneidkanten 30, 32, 34. Am Übergang zwischen den Spanflächen 68 und den Teil-Anlageflächen 54.1, 54.2 und 54.3 erstreckt sich jeweils eine Übergangsfläche 70. Sowohl die Spanflächen 68 als auch die Übergangsflächen 70 liegen "unterhalb" der Scheitelpunkte der dritten Schneidkanten 34. Die Spanflächen 68 bzw. die Übergangsflächen 70 haben also einen geringeren Abstand von der Mittelebene 20 als die Scheitelpunkte der dritten Schneidkanten 34. Es versteht sich, dass Gleiches auch für die zweite Seite 18 der Schneidplatte 12 gilt.

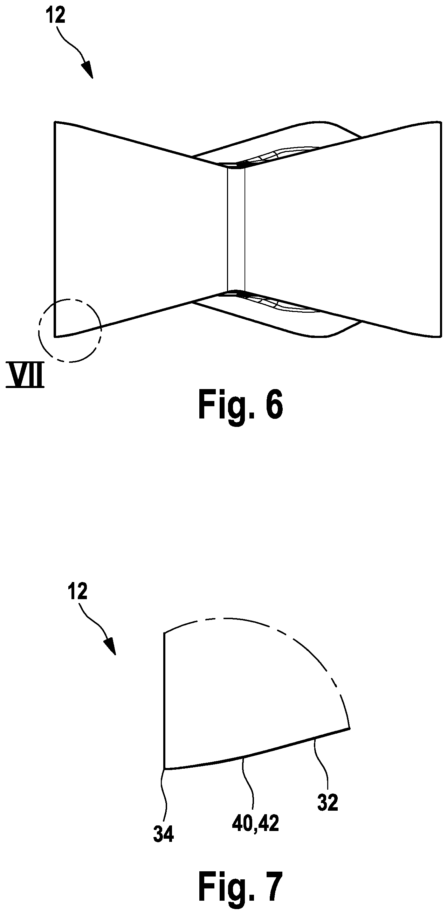

Die Fig. 6 und 7 zeigen ein zweites Ausführungsbeispiel der Schneidplatte 12. Dieses zweite Ausführungsbeispiel entspricht im Wesentlichen dem in den Fig. 1-5 gezeigten ersten Ausführungsbeispiel. Lediglich der Krümmungsradius der dritten, bogenförmigen Schneidkante 34 ist etwas kleiner. Damit es nicht zu einer Unstetigkeit an den jeweiligen Übergängen zwischen den dritten Schneidkanten 34 und den ersten Schneidkanten 30 bzw. den zweiten Schneidkanten 32 kommt, ist die dritte Schneidkante 34 gemäß dieses Ausführungsbeispiels insbesondere im Bereich ihrer Enden 36, 40 um eine senkrecht zur Bohrungsachse 22 verlaufende Achse gekrümmt. Die dritten Schneidkanten 34 sind also nicht nur um eine Achse, welche parallel zu der Bohrungsachse 22 verläuft, gekrümmt, sondern auch orthogonal dazu. Dies ermöglicht einen stetigen Übergang von den dritten Schneidkanten 34 zu den ersten bzw. zweiten Schneidkanten 30, 32.

In den Fig. 8 und 9 ist der Werkzeughalter 14 des erfindungsgemäßen Fräswerkzeugs 10 ohne Schneidplatte 12 dargestellt. In den Fig. 10-12 ist das Fräswerkzeug 10 samt Halter 14 und Schneidplatte 12 dargestellt.

Der Werkzeughalter 14 weist einen Schaft 72 auf, mit Hilfe dessen der Werkzeughalter 14 in einem geeigneten Spannmittel in einer Werkzeugmaschine einspannbar ist. Im Bereich seines vorderen Endes 74 weist der Schaft 72 in dem vorliegenden Ausführungsbeispiel zwei Schneidplatten-Aufnahmen 76 auf, welche zur Aufnahme jeweils einer Schneidplatte 12 dienen. Es versteht sich jedoch, dass der Werkzeughalter 14 in alternativen Ausführungsbeispielen auch mehr als zwei Schneidplatten-Aufnahmen 76 aufweisen kann.

Jede der Schneidplatten-Aufnahmen 76 weist ein in einer Bohrung vorgesehenes Gewinde 78 auf, welches entlang einer Gewindeachse 80 verläuft und in das eine Schraube 82 eingreifen kann, die zur Befestigung der Schneidplatte 12 an dem Werkzeughalter 14 dient. Jede Schneidplatten-Aufnahme 76 weist ferner drei Halter-Anlageflächen 84, 86, 88 auf. Die erste Halter-Anlagefläche 84 verläuft orthogonal zu der Gewindeachse 80. Die zweite und die dritte Halter-Anlagefläche 86, 88 verlaufen parallel zu der Gewindeachse 80, also orthogonal zu der ersten Halter-Anlagefläche 84. Die zweite Halter-Anlagefläche 86 und die dritte Halter-Anlagefläche 88 schließen untereinander einen stumpfen Winkel ein.

Die Schneidplatte 12 liegt in montiertem Zustand des Werkzeugs 10 ausschließlich an den drei vorgenannten Halter-Anlageflächen 84,86,88 an dem Werkzeughalter 14 an. Die Schneidplatte 12 liegt mit der ersten Anlagefläche 54 oder der zweiten Anlagefläche 60 an der ersten Halter-Anlagefläche 84 an. Ferner liegt sie mit ihrer Umfangsfläche 26 an den Halter-Anlageflächen 86, 88 an.

Die Gewindeachse 80 ist absichtlich etwas versetzt im Vergleich zur Anordnung der Bohrungsachse 22 der Schneidplatte 12. Genauer gesagt, ist ein Abstand zwischen der Gewindeachse 80 und der zweiten Halter-Anlagefläche 86 gleich groß wie ein Abstand zwischen der Gewindeachse 80 und der dritten Halter-Anlagefläche 88, jedoch kleiner als ein Abstand zwischen der Bohrungsachse 22 und den beiden Bereichen der Umfangsfläche 26, mit denen die Schneidplatte 12 an den Halter-Anlageflächen 86 bzw. 88 anliegt. Hierdurch entsteht beim Befestigen der Schraube 82 ein Niederzug, der die Schneidplatte 12 gegen die Halter-Anlageflächen 86, 88 drückt.

## Patentansprüche

1. Schneidplatte (12) für ein Fräswerkzeug (10), mit einer ersten Seite (16), einer zu der ersten Seite (16) identischen zweiten Seite (18) und einer Umfangsfläche (26), die sich zwischen der ersten und der zweiten Seite (16, 18) erstreckt, mit einer Bohrung (24), welche sich entlang einer Bohrungsachse (22) erstreckt, wobei die Schneidplatte (12) 120°-drehsymmetrisch zu der Bohrungsachse (22) ist, wobei die Schneidplatte (12) sowohl auf der ersten Seite (16) als auch auf der zweiten Seite (18) jeweils drei identisch geformte Schneidenbereiche (28, 28', 28") aufweist, welche sich am Übergang zwischen der ersten Seite (16) und der Umfangsfläche (26) bzw. am Übergang zwischen der zweiten Seite (18) und der Umfangsfläche (26) befinden, wobei die insgesamt sechs Schneidenbereiche (28, 28', 28") jeweils eine erste, geradlinig verlaufende Schneidkante (30), eine zweite, geradlinig verlaufende Schneidkante (32) und eine dritte, bogenförmige Schneidkante (34) aufweisen, wobei ein erstes Ende (38) der ersten Schneidkante (30) mit einem ersten Ende (36) der dritten Schneidkante (34) verbunden ist, und ein erstes Ende (42) der zweiten Schneidkante (32) mit einem zweiten Ende (40) der dritten Schneidkante (34) verbunden ist, wobei die ersten und die zweiten Schneidkanten (30, 32) gleich lang sind, wobei die Schneidplatte (12) auf der ersten Seite (16) eine orthogonal zu der Bohrungsachse (22) verlaufende erste Anlagefläche (54) aufweist, welche in einer ersten Anlage-Ebene (56) liegt, und auf der zweiten Seite (18) eine orthogonal zu der Bohrungsachse (22) verlaufende zweite Anlagefläche (60) aufweist, welche in einer zweiten Anlage-Ebene (62) liegt, und wobei die ersten Schneidkanten (30) an ihren den ersten Enden (38) gegenüberliegenden zweiten Enden (48) mit jeweils einer von insgesamt sechs bogenförmigen Kanten (44) verbunden sind, deren Scheitelpunkt (64) sich zwischen der ersten und der zweiten Anlage-Ebene (56, 62) befindet,
**dadurch gekennzeichnet, dass** ein imaginärer Kreis (66), dessen Mittelpunkt auf der Bohrungsachse (22) liegt, in einer Draufsicht in Richtung der Bohrungsachse (22) betrachtet, die auf der ersten Seite (16) angeordneten ersten und zweiten Schneidkanten (30, 32) an insgesamt sechs Stellen, allerdings jede dieser Schneidkanten (30, 32) nur an jeweils einer Stelle tangiert.

2. Schneidplatte gemäß Anspruch 1, wobei die zweiten Enden (48) der ersten Schneidkanten (30) jeweils mit einem ersten Ende (46) der bogenförmigen Kanten (44) verbunden sind, und wobei die zweiten Schneidkanten (32) mit ihren den ersten Enden (42) gegenüberliegenden zweiten Enden (52) jeweils mit einem zweiten Ende (50) der bogenförmigen Kanten (44) verbunden sind.

3. Schneidplatte gemäß Anspruch 1 oder 2, wobei die ersten Schneidkanten (30) mit den zweiten Schneidkanten (32) der jeweils gleichen Schneidenbereiche einen spitzen Winkel α einschließen.

4. Schneidplatte gemäß Anspruch 3, wobei für den spitzen Winkel α gilt: 84° ≤ α ≤ 86°.

5. Schneidplatte gemäß Anspruch 4, wobei der spitze Winkel α 85° beträgt.

6. Schneidplatte gemäß einem der Ansprüche 1 bis 5, wobei die Schneidplatte (12), zumindest bis auf die Bohrung (24), spiegelsymmetrisch zu einer Mittelebene (20) ist, welche orthogonal zu der Bohrungsachse (22) verläuft und äquidistant zu der ersten und der zweiten Anlage-Ebene (56, 62) ist.

7. Schneidplatte gemäß Anspruch 6, wobei die dritten, bogenförmigen Schneidkanten (34) jeweils einen Scheitelpunkt aufweisen, wobei die Scheitelpunkte der dritten Schneidkanten (34) im Vergleich zu allen übrigen Punkten der Schneidplatte (12) jeweils den größten Abstand zu der Mittelebene (20) haben.

8. Schneidplatte gemäß einem der Ansprüche 1 bis 7, wobei die erste Anlagefläche (54) drei voneinander getrennte erste Teilflächen (54.1, 54.2, 54.3) aufweist, die in der ersten Anlage-Ebene (56) liegen, und wobei die zweite Anlagefläche (60) drei voneinander getrennte zweite Teilflächen aufweist, die in der zweiten Anlage-Ebene (62) liegen.

9. Schneidplatte gemäß Anspruch 8, wobei die drei ersten Teilflächen (54.1, 54.2, 54.3) durch drei erste Vertiefungen (58) voneinander getrennt sind, und wobei die drei zweiten Teilflächen durch drei zweite Vertiefungen voneinander getrennt sind.

10. Fräswerkzeug (10) mit:
- einer Schneidplatte (12) gemäß einem der Ansprüche 1 bis 9;
- einem Werkzeughalter (14), und
- einem Befestigungselement zum Befestigen der Schneidplatte (12) an dem Werkzeughalter (14).

11. Fräswerkzeug gemäß Anspruch 10, wobei das Befestigungselement als Schraube (82) ausgestaltet ist, und wobei der Werkzeughalter (14) ein entlang einer Gewindeachse (80) verlaufendes Gewinde (78) aufweist, in das die Schraube (82) eingreift, wobei der Werkzeughalter (14) eine erste, eine zweite und eine dritte Halter-Anlagefläche (84, 86, 88) aufweist, wobei die erste Halter-Anlagefläche (84) orthogonal zu der Gewindeachse (80) verläuft, und die zweite und dritte Halter-Anlagefläche (86, 88) quer zueinander und im Wesentlichen parallel zu der Gewindeachse (80) verlaufen, und wobei die Schneidplatte (12) in montiertem Zustand des Werkzeugs (10) am Werkzeughalter (14) lediglich an der ersten, der zweiten und der dritten Halter-Anlagefläche (84, 86, 88) anliegt.

12. Fräswerkzeug gemäß Anspruch 11, wobei die zweite und die dritte Halter-Anlagefläche (86, 88) untereinander einen stumpfen Winkel einschließen und die Schneidplatte (12) mit einem ersten Bereich der Umfangsfläche (26) an der zweiten Halter-Anlagefläche (86) anliegt und mit einem zweiten Bereich der Umfangsfläche (26) an der dritten Halter-Anlagefläche (88) anliegt.

13. Fräswerkzeug gemäß Anspruch 12, wobei ein Abstand zwischen der Gewindeachse (80) und der zweiten Halter-Anlagefläche (86) gleich groß ist wie ein Abstand zwischen der Gewindeachse (80) und der dritten Halter-Anlagefläche (88), jedoch kleiner ist als ein Abstand zwischen der Bohrungsachse (22) und den beiden Bereichen der Umfangsfläche (26).

## Claims

1. A cutting insert (12) for a milling tool (10), having a first side (16), a second side (18) which is identical to the first side (16) and a circumferential surface (26) which extends between the first and the second sides (16, 18), with a bore (24) which extends along a bore axis (22), wherein the cutting insert (12) is 120° rotationally symmetrical with respect to the bore axis (22), wherein the cutting insert (12) comprises on each of the first side (16) and the second side (18) three identically formed cutting regions (28, 28', 28"), respectively, which are situated at a transition between the first side (16) and the circumferential surface (26) or at a transition between the second side (18) and the circumferential surface (26), respectively, wherein each of the in total six cutting regions (28, 28', 28") comprises a first rectilinear cutting edge (30), a second rectilinear cutting edge (32) and a third arcuate cutting edge (34), wherein a first end (38) of the first cutting edge (30) is connected to a first end (36) of the third cutting edge (34), and a first end (42) of the second cutting edge (32) is connected to a second end (40) of the third cutting edge (34), wherein the first and the second cutting edges (30, 32) are of same length, wherein the cutting insert (12) comprises on the first side (16) a first contact surface (54) which extends orthogonally to the bore axis (22) and lies in a first contact plane (56), and on the second side (18) comprises a second contact surface (60) which extends orthogonally to the bore axis (22) and lies in a second contact plane (62), and wherein each of the first cutting edges (30) are connected at their second ends (48), which are located opposite the first ends (38), to one of a total of six arcuate edges (44), a vertex (64) of which is located between the first and the second contact planes (56, 62),
**characterized in that** an imaginary circle (66), a center of which lies on the bore axis (22), is, when viewed in a plan view in the direction of the bore axis (22), at a total of six points tangent to the first and second cutting edges (30, 32) arranged on the first side (16), however only at one point tangent to each of said cutting edges (30, 32).

2. The cutting insert as claimed in claim 1, wherein each of the second ends (48) of the first cutting edges (30) are connected to a first end (46) of one of the arcuate edges (44), and wherein each of the second cutting edges (32) are connected with their second ends (52), which are located opposite the first ends (42), to a second end (50) of one of the arcuate edges (44).

3. The cutting insert as claimed in claim 1 or 2, wherein the first cutting edges (30) enclose an acute angle α with the second cutting edges (32) of the respective same cutting regions.

4. The cutting insert as claimed in claim 3, wherein 84°≤ α ≤ 86° applies to the acute angle α.

5. The cutting insert as claimed in claim 4, wherein the acute angle α is 85°.

6. The cutting insert as claimed in one of claims 1 to 5, wherein the cutting insert (12), at least except for the bore (24), is mirror-symmetrical with respect to a center plane (20) which extends orthogonally to the bore axis (22) and is equidistant to the first and the second contact planes (56, 62).

7. The cutting insert as claimed in claim 6, wherein each of the third arcuate cutting edges (34) comprises a vertex, wherein each of the vertices of the third cutting edges (34) are at a greatest distance to the center plane (20) compared to all remaining points of the cutting insert (12).

8. The cutting insert as claimed in one of claims 1 to 7, wherein the first contact surface (54) comprises three first part surfaces (54.1, 54.2, 54.3) which are separated from one another and lie in the first contact plane (56), and wherein the second contact surface (60) comprises three second part surfaces which are separated from one another and lie in the second contact plane (62).

9. The cutting insert as claimed in claim 8, wherein the three first part surfaces (54.1, 54.2, 54.3) are separated from one another by three first indentations (58), and wherein the three second part surfaces are separated from one another by three second indentations.

10. A milling tool (10) having:
- a cutting insert (12) as claimed in one of claims 1 to 9;
- a tool holder (14) and
- a fastening element for fastening the cutting insert (12) to the tool holder (14).

11. The milling tool as claimed in claim 10, wherein the fastening element is designed as a screw (82), and wherein the tool holder (14) comprises a thread (78) which extends along a thread axis (80), in which thread the screw (82) engages, wherein the tool holder (14) comprises a first, a second and a third holder-contact surface (84, 86, 88), wherein the first holder contact surface (84) extends orthogonally to the thread axis (80), and the second and third holder contact surfaces (86, 88) extend transversely to one another and substantially parallel to the thread axis (80), and wherein the cutting insert (12), in a mounted state of the tool (10), abuts against the tool holder (14) only at the first, the second and the third holder contact surfaces (84, 86, 88).

12. The milling tool as claimed in claim 11, wherein the second and the third holder contact surfaces (86, 88) enclose an obtuse angle between one another and the cutting insert (12) abuts against the second holder contact surface (86) with a first region of the circumferential surface (26) and abuts against the third holder contact surface (88) with a second region of the circumferential surface (26).

13. The milling tool as claimed in claim 12, wherein a distance between the thread axis (80) and the second holder contact surface (86) is as large as a distance between the thread axis (80) and the third holder contact surface (88) but smaller than a distance between the bore axis (22) and the two regions of the circumferential surface (26).

## Revendications

1. Plaquette de coupe (12) pour un outil de fraisage (10), avec un premier côté (16), un deuxième côté (18) identique au premier côté (16) et une surface périphérique (26) qui s'étend entre le premier et le deuxième côté (16, 18), avec un alésage (24) qui s'étend le long d'un axe d'alésage (22), la plaquette de coupe (12) étant symétrique en rotation à 120° par rapport à l'axe d'alésage (22), la plaquette de coupe (12) présentant, tant sur le premier côté (16) que sur le deuxième côté (18), respectivement trois zones de coupe (28, 28', 28") de forme identique qui se trouvent à la transition entre le premier côté (16) et la surface périphérique (26) ou à la transition entre le deuxième côté (18) et la surface périphérique (26), les six zones de coupe (28, 28', 28") au total présentant respectivement une première arête de coupe (30) s'étendant en ligne droite, une deuxième arête de coupe (32) s'étendant en ligne droite et une troisième arête de coupe (34) en forme d'arc, une première extrémité (38) de la première arête de coupe (30) étant reliée à une première extrémité (36) de la troisième arête de coupe (34), et une première extrémité (42) de la deuxième arête de coupe (32) étant reliée à une deuxième extrémité (40) de la troisième arête de coupe (34), les première et deuxième arêtes de coupe (30, 32) étant de même longueur, la plaquette de coupe (12) présentant sur le premier côté (16) une première surface d'appui (54) s'étendant orthogonalement à l'axe d'alésage (22), qui se situe dans un premier plan d'appui (56), et, sur le deuxième côté (18), une deuxième surface d'appui (60) s'étendant orthogonalement à l'axe d'alésage (22), qui se situe dans un deuxième plan d'appui (62), et les premières arêtes de coupe (30) étant reliées, à leurs deuxièmes extrémités (48) opposées aux premières extrémités (38), à l'une respective de six arêtes en forme d'arc (44) au total, dont le sommet (64) se trouve entre le premier et le deuxième plan d'appui (56, 62),
**caractérisée en ce qu'**un cercle imaginaire (66), dont le centre se situe sur l'axe d'alésage (22), considéré dans une vue en plan dans la direction de l'axe d'alésage (22), est tangent aux premières et deuxièmes arêtes de coupe (30, 32) agencées sur le premier côté (16) en six endroits au total, mais pour chacune de ces arêtes de coupe (30, 32) en un seul endroit à la fois.

2. Plaquette de coupe selon la revendication 1, dans laquelle les deuxièmes extrémités (48) des premières arêtes de coupe (30) sont reliées respectivement à une première extrémité (46) des arêtes en forme d'arc (44), et dans laquelle les deuxièmes arêtes de coupe (32) sont reliées respectivement par leurs deuxièmes extrémités (52) opposées aux premières extrémités (42) à une deuxième extrémité (50) des arêtes en forme d'arc (44).

3. Plaquette de coupe selon la revendication 1 ou 2, dans laquelle les premières arêtes de coupe (30) forment un angle aigu α avec les deuxièmes arêtes de coupe (32) des mêmes zones de coupe respectives.

4. Plaquette de coupe selon la revendication 3, dans laquelle l'angle aigu α est tel que : 84° ≤ α ≤ 86°.

5. Plaquette de coupe selon la revendication 4, dans laquelle l'angle aigu α est de 85°.

6. Plaquette de coupe selon l'une quelconque des revendications 1 à 5, dans laquelle la plaquette de coupe (12), au moins à l'exception de l'alésage (24), est symétrique par rapport à un plan médian (20) qui s'étend orthogonalement à l'axe d'alésage (22) et qui est équidistant du premier et du deuxième plan d'appui (56, 62).

7. Plaquette de coupe selon la revendication 6, dans laquelle les troisièmes arêtes de coupe (34) en forme d'arc présentent respectivement un sommet, les sommets des troisièmes arêtes de coupe (34) ayant respectivement la plus grande distance par rapport au plan médian (20) en comparaison de tous les autres points de la plaquette de coupe (12).

8. Plaquette de coupe selon l'une quelconque des revendications 1 à 7, dans laquelle la première surface d'appui (54) présente trois premières surfaces partielles (54.1, 54.2, 54.3) séparées les unes des autres, qui se situent dans le premier plan d'appui (56), et dans laquelle la deuxième surface d'appui (60) présente trois deuxièmes surfaces partielles séparées les unes des autres, qui se situent dans le deuxième plan d'appui (62).

9. Plaquette de coupe selon la revendication 8, dans laquelle les trois premières surfaces partielles (54.1, 54.2, 54.3) sont séparées les unes des autres par trois premiers creux (58), et dans laquelle les trois deuxièmes surfaces partielles sont séparées les unes des autres par trois deuxièmes creux.

10. Outil de fraisage (10) avec :
- une plaquette de coupe (12) selon l'une quelconque des revendications 1 à 9 ;
- un support d'outil (14), et
- un élément de fixation pour fixer la plaquette de coupe (12) sur le support d'outil (14).

11. Outil de fraisage selon la revendication 10, dans lequel l'élément de fixation est conçu sous forme de vis (82), et dans lequel le support d'outil (14) présente un filetage (78) s'étendant le long d'un axe de filetage (80), dans lequel s'engage la vis (82), le support d'outil (14) présentant une première, une deuxième et une troisième surface d'appui de support (84, 86, 88), dans lequel la première surface d'appui de support (84) s'étend orthogonalement à l'axe de filetage (80), et la deuxième et la troisième surface d'appui de support (86, 88) s'étendent transversalement l'une par rapport à l'autre et essentiellement parallèlement à l'axe de filetage (80), et dans lequel la plaquette de coupe (12), à l'état monté de l'outil (10) sur le support d'outil (14), est en appui uniquement contre la première, la deuxième et la troisième surface d'appui de support (84, 86, 88).

12. Outil de fraisage selon la revendication 11, dans lequel la deuxième et la troisième surface d'appui de support (86, 88) forment entre elles un angle obtus et la plaquette de coupe (12) s'appuie par une première zone de la surface périphérique (26) sur la deuxième surface d'appui de support (86) et s'appuie par une deuxième zone de la surface périphérique (26) sur la troisième surface d'appui de support (88).

13. Outil de fraisage selon la revendication 12, dans lequel une distance entre l'axe de filetage (80) et la deuxième surface d'appui de support (86) est égale à une distance entre l'axe de filetage (80) et la troisième surface d'appui de support (88), mais est inférieure à une distance entre l'axe d'alésage (22) et les deux zones de la surface périphérique (26).
